# EUROPÄISCHE PATENTANMELDUNG

(11) **EP 1 005 249 A2**
(43) Veröffentlichungstag der Anmeldung: **31.05.2000**
(21) Anmeldenummer: 99440330.1
(22) Anmeldetag: 29.11.1999
(51) Int. Cl.: H04Q 11/04

(54) **Einrichtung eines Systems für interaktive und kommunikative Dienste**

(30) Priorität: 27.11.1998 DE 19854802
(71) Anmelder: ALCATEL, 75008 Paris (FR)
(72) Erfinder: Ricken, Christof, Dr., 70178 Stuttgart (DE); Vogt, Carsten, Dr., 71686 Remseck (DE)
(74) Vertreter: Menzietti, Domenico, Dipl.-Ing

(57) **Zusammenfassung**

Es ist Aufgabe der Erfindung eine Einrichtung eines Systems für interaktive und kommunikative Dienste (SYS) mit einer optimierten Konfigurierung der Zeitfenster zu schaffen. Gelöst wird die Aufgabe durch eine Einrichtung, die insbesondere eine Detektionseinheit (DET) und eine Verarbeitungseinheit (2) beinhaltet. Die Detektionseinheit (DET) überwacht den Rückkanal und detektiert das Verkehrsaufkommen über die Zeit. Die Verarbeitungseinrichtung (2) ermittelt aus dem detektierten Verkehrsaufkommen eine optimierte Parametrierung und konfiguriert die Zeitfenster mittels dieser Parametrierung. Das Verkehrsaufkommen beinhaltet Art und Weise der Nutzung der bereitgestellten Zeitfenster. Das detektierte Verkehrsaufkommen beinhaltet beispielsweise eine mit der Zeit abnehmende Belegung der ranging Zeitfenster, so daß die Konfigurierung online die Anzahl der zugewiesenen ranging Zeitfenster mit der Zeit reduzieren und z.B. durch contention Zeitfenster ersetzen kann, um die Kapazität für Datenübertragungen zu erhöhen. Die Konfigurierung wird dynamisch an die Anforderungen des Systems angepaßt. Dadurch wird eine optimierte Ausnutzung der verfügbaren Kapazität erzielt.

## Beschreibung

Die Erfindung bezieht sich auf eine Einrichtung eines Systems für interaktive und kommunikative Dienste gemäß dem Oberbegriff des Patentanspruchs 1.

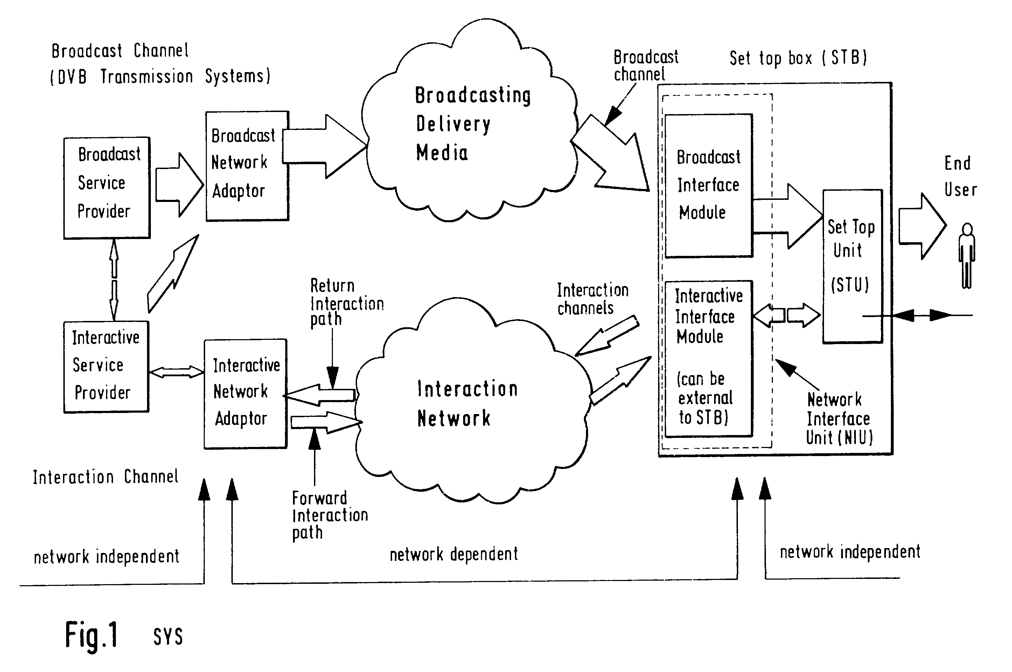

In Fig. 1 ist ein schematischer Aufbau eines Systems SYS für interaktive und kommunikative Dienste gezeigt. Das System SYS beinhaltet einen ersten Pfad über den ausgehend von einem Broadcast Service Provider erste Informationen über einen Broadcast Network Adapter und ein Broadcast Delivery Media zu einer Vielzahl von Endstellen übertragen werden. Der Broadcast Service Provider ist beispielsweise eine Fernsehanstalt, die Fernsehsignale aussendet. Die Fernsehsignale werden an alle Endstellen gesendet und von allen empfangen. Das Broadcasting Delivery Media ist beispielsweise ein unidirektionales Verteilnetz, z.B. ein Koaxialkabel netz über das die Fernsehsignale zu den Endstellen übertragen werden. Jede Endstelle beinhaltet ein Broadcast Interface Module über das die Fernsehsignale empfangen werden. Das interaktive System beinhaltet einen zweiten Pfad über den zweite Informationen bidirektional übertragen werden, von einem Interactive Service Provider über einen Interactive Network Adapter und ein Interaction Network zu der Vielzahl von Endstellen und umgekehrt. Der Interactive Service Provider ist beispielsweise ein Diensteanbieter, der Videofilme gespeichert hat und auf Abruf aussendet. Der Abruf erfolgt über den zweiten Pfad. Die Videofilme werden über den ersten Pfad in Form von Videosignalen an alle Endstellen gesendet und von derjenigen empfangen, die den entsprechenden Videofilm abgerufen hat. Der Interactive Service Provider kann zusätzlich eine Schnittstelle zu einer Vermittlungsstelle aufweisen. Über den zweiten Pfad ist dann Kabeltelefonie, auch als cable phone bezeichnet, möglich. Das Interaction Network ist beispielsweise ein bidirektionales Netz mit einem Vorwärtskanal und einem Rückkanal. Broadcasting Delivery media und Interaction Network können auch teilweise überlappen, so z.B. bei einem hybriden Glasfaser Koaxialkabel Netz, dem sog. HFC=Hybrid Fibre Coax, wie z.B aus der Zeitschrift Elektronik 5/1995, Seiten 50 bis 58 bekannt, oder einem HFR=Hybrid Fibre Radio, einem hybriden Netz aus Glasfaser und Funk. Jede Endstelle beinhaltet ein Interactive Interface Module über das die Signale im Vorwärtskanal empfangen und die Signale im Rückkanal übertragen werden. Broadcast Interface Module und Interactive Interface Module sind beispielsweise zusammen mit einer Set Top Unit in einer Set Top Box untergebracht, die mit einem Fernsehgerät zur Darstellung der Fernseh- und Videosignale verbunden ist. Der Abruf der Videosignale über den Rückkanal erfolgt beispielsweise über die Fernbedienung des Fernsehgerätes.

Der Broadcast Network Adapter dient dazu, die Fernseh- und Videosignale zu empfangen und diese gemeinsam zum Broadcasting Delivery Media weiterzuleiten. Der Interactive Network Adapter ist zwischen Interactive Service Provider und Interaction Network geschaltet und hat die Aufgabe die verschiedenen Protokolle aneinander anzupassen. Der Interactive Network Adapter hat ferner die Aufgabe für den Vorwärts- und den Rückkanal des Interaction Networks eine Schnittstelle bereitzustellen, die derart ausgelegt ist, das sie konform zu den Schnittstellen der Interactive Interface Module der Endstellen ist. Verschiedene Interactive Interface Module verschiedener Hersteller können auf diese Art und Weise mit ein und demselben Interactive Network Adapter kommunizieren. Der Rückkanal ist beispielsweise so ausgelegt, das Informationen in einer Rahmenstruktur übertragen werden. Die Rahmenstruktur hat mehrere Zeitfenster. Die Übertragung erfolgt beispielsweise in Form von ATM Zellen, ATM=Asynchroner Transfer Modus. Mindestens einem Teil der Zeitfenster ist mittels Parametrierung eine Konfiguration beinhaltend die Reservierung des jeweiligen Zeitfensters für einen bestimmten Zweck zuweisbar. Als Zuweisung sind beispielweise ranging, contention, reservation und fixed rate vorgesehen.

Unter ranging wird eine Zuweisung verstanden, die es einer Endstelle in einem ranging Zeitfenster insbesondere zu Synchronisationszwecken bei der Initialisierung erlaubt ihren lokalen Takt mit dem Takt des Interactive Network Adapters zu synchronisieren und die Signallaufzeit zwischen Interactive Network Adapter und Endstelle zu bestimmen, um die nachfolgenden Aussendungen so vorzunehmen, daß sie in dem vorgesehenen Zeitfenster am Interactive Network Adapter eintreffen.

Unter contention wird eine Zuweisung verstanden, die es mehreren Endstellen in einem contention Zeitfenster insbesondere erlaubt Daten zum Interactive Network Adapter zu senden. Der Zugriff auf das contention Zeitfenster ist allen Endstellen gestattet, so daß es bei gleichzeitigem Aussenden von Daten zu Kollisionen kommen kann. Das contention Zeitfenster wird insbesondere für Signalisierungen verwendet, z.B. Verbindungsaufbau und -abbau.

Unter reservation wird eine Zuweisung verstanden, die es einer Endstelle in einem reservation Zeitfenster insbesondere erlaubt Daten zum Interactive Network Adapter zu senden. Nur eine Endstelle hat Zugriff auf ein reservation Zeitfenster, so daß es nicht zu Kollisionen kommen kann.

Unter fixed rate wird eine Zuweisung verstanden, die es einer Endstelle in einem fixed rate Zeitfenster insbesondere erlaubt Daten bis zu einer vorgegebenen maximalen Datenrate zum Interactive Network Adapter zu senden. Ein fixed rate Zeitfenster wird nur für eine spezielle Verbindung vergeben. Ein fixed rate Zeitfenster kann beispielsweise dauerhaft vergeben werden und dient dann als sog. Standleitung.

Im Stand der Technik wird die Parametrierung und Konfiguration der Zeitfenster durch ein Netzwerk Management vorgenommen. Vor der Initialisierung des Systems werden die einzelnen Zuweisungen der verfügbaren Zeitfenster fest vergeben, z.B. drei Zeitfenster als ranging Zeitfenster, zehn Zeitfenster als contention Zeitfenster, usw.. Die Zuweisung ist starr und nicht an die sich während des Betriebs verändernden Anforderungen angepaßt.

Es ist Aufgabe der Erfindung eine Einrichtung eines Systems für interaktive und kommunikative Dienste mit einer optimierten Konfigurierung der Zeitfenster zu schaffen.

Gelöst wird die Aufgabe durch die Einrichtung gemäß Patentanspruch 1. Die Einrichtung beinhaltet insbesondere eine Detektionseinheit und eine Verarbeitungseinheit, die miteinander verbunden sind. Die Detektionseinheit überwacht den Rückkanal und detektiert das Verkehrsaufkommen über die Zeit. Die Verarbeitungseinrichtung ermittelt aus dem detektierten Verkehrsaufkommen eine optimierte Parametrierung und konfiguriert die Zeitfenster mittels dieser Parametrierung. Das Verkehrsaufkommen beinhaltet Art und Weise der Nutzung der bereitgestellten Zeitfenster. Beispielsweise sind zu Beginn dreißig Zeitfenster als ranging Zeitfenster zugewiesen. Bei der Initialisierung werden mehr ranging Zeitfenster benötigt als während des Betriebs, weil sich zu Beginn zunächst alle Endstellen synchronisieren müssen. Während des Betriebs müssen sich nur neu hinzugeschaltete Endstellen synchronisieren, so daß beispielsweise eine Zuweisung von insgesamt zwei ranging Zeitfenstern ausreicht. Das detektierte Verkehrsaufkommen beinhaltet somit beispielsweise eine mit der Zeit abnehmende Belegung der ranging Zeitfenster, so daß die Konfigurierung online die Anzahl der zugewiesenen ranging Zeitfenster mit der Zeit reduzieren und z.B. durch contention Zeitfenster ersetzen kann, um die Kapazität für Datenübertragungen zu erhöhen. Die Konfigurierung wird dynamisch an die Anforderungen des Systems angepaßt. Dadurch wird eine optimierte Ausnutzung der verfügbaren Kapazität erzielt.

Bei einer bevorzugten Ausführungsform der Erfindung beinhaltet die Einrichtung eine Schnittstelle zu einem Netzwerkmanagement. Über diese Schnittstelle werden Parameter für eine Standard-Konfiguration beinhaltend Minimal- und Maximalwerte empfangen, die zur Verarbeitungseinheit übertragen werden. Die Verarbeitungseinrichtung ermittelt aus dem detektierten Verkehrsaufkommen unter Berücksichtigung der Standard-Konfiguration die optimierte Parametrierung. Für die Anzahl der Zeitfenster, die für einen bestimmten Zweck vorgesehen sind, werden Minimal- und Maximalwerte vorgegeben damit sich das System nicht selbst blockiert. So sind als Minimalwerte z.B. ein ranging Zeitfenster, ein contention Zeitfenster, usw. vorgegeben. Als sog. default Werte können dann beispielsweise die Mittelwerte aus Minimal- und Maximalwerten verwendet werden.

Bei einer weiteren bevorzugten Ausführungsform der Erfindung beinhaltet die Einrichtung einen Speicher zum Abspeichern von Parametern einer Standard-Konfiguration beinhaltend Minimal- und Maximalwerte. Die Verarbeitungseinrichtung ermittelt aus dem detektierten Verkehrsaufkommen unter Berücksichtigung der Standard-Konfiguration die optimierte Parametrierung. Diese Ausführungsform ist unabhängig von einem Netzwerkmanagement.

Bei einer weiteren bevorzugten Ausführungsform der Erfindung wird die aktuelle Konfiguration der Zeitfenster über den Vorwärtskanal zu den Endstellen übertragen. Die Endstellen werden auf die Weise darüber in Kenntnis gesetzt, welche Zeitfenster sie zu welchem Zeck verwenden können. Wenn ein Signalisierungsversuch einer Endstelle in einem contention Zeitfenster fehlschlägt, z.B. aufgrund eines mehrfachen gleichzeitigen Zugriffs mehrerer Endstellen, so kann die Endstelle den Signalisierungsversuch in einem anderen contention Zeitfenster wiederholen.

Die Erfindung ist nicht auf Zeitfenster beschränkt. Bei einer weiteren bevorzugten Ausführungsform der Erfindung werden anstelle der Zeitfenster Frequenzfenster oder Code-Multiplex-Fenster konfiguriert. Beispielsweise arbeitet das System im Rückkanal anstatt mit TDMA mit FDMA; TDMA=Time Division Multiple Access, FDMA=Frequency Division Multiple Access. Dann werden anstelle von Zeitfenstern einzelne Frequenzen oder Frequenzbereiche zugewiesen. Z.B. sind in einer Konfiguration für die Frequenzen/Trägerfrequenzen f1 bis f3 drei ranging Frequenzfenster, für die Frequenzen/Trägerfrequenzen f4 bis f10 sieben contention Frequenzfenster, usw. vorgesehen. Oder das System arbeitet im Rückkanal anstatt mit TDMA mit CDMA; CDMA=Code Division Multiple Access. Dann werden anstelle von Zeitfenstern einzelne Codes zugewiesen.

Angewendet auf das zu Fig. 1 beschriebene System wird die Aufgabe der Erfindung gelöst durch einen Interaktiver Netzwerk Adapter nach ETS 300 800 Version 22. April 1998, der eine Einrichtung nach Patentanspruch 1 beinhaltet. Die Übertragung im Rückkanal erfolgt dann mindestens abschnittsweise in Form von ATM Zellen und die Konfigurierung der Zeitfenster als ranging, contention, reservation und/oder fixed rate.

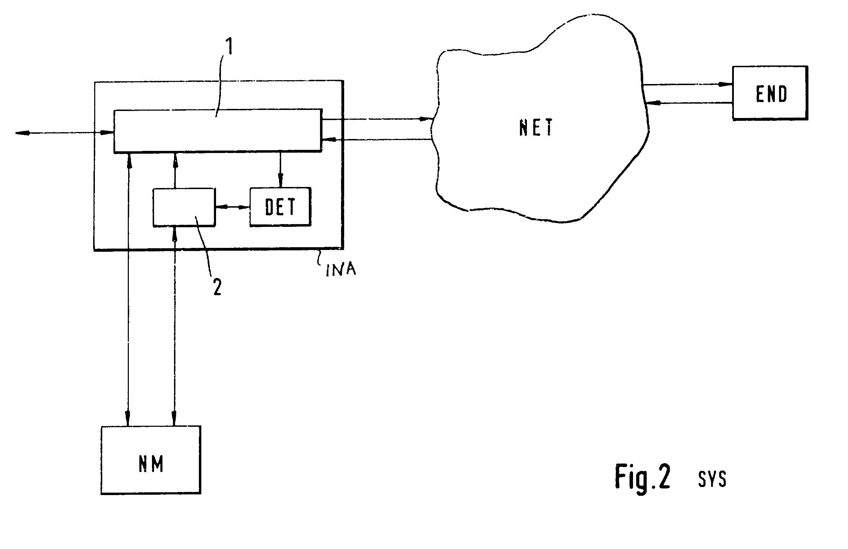

Im folgenden wird ein Ausführungsbeispiel der Erfindung unter Zuhilfenahme von Fig. 2 erläutert.

Fig. 2 zeigt die schematische Darstellung eines Ausschnitts des Systems SYS aus Fig. 1 mit einem erfindungsgemäßen Interactive Network Adapter. Der Interactive Network Adapter INA ist über das bidirektionale Interaction Network NET mit einer Vielzahl von Endstellen END verbunden, wovon eine beispielhaft dargestellt ist. Der Interactive Network Adapter INA ist ferner mit einem Netzwerk Management verbunden.

Erste Informationen, z.B. Steuerinformationen werden über den Vorwärtskanal des Interaction Networks NET vom Interactive Network Adapter INA zu den Endstellen END übertragen. Zweite Informationen, z.B. Abrufsignale werden über den Rückkanal des Interaction Networks NET von den Endstellen END zum Interactive Network Adapter INA übertragen. Der Zugriff auf den Rückkanal erfolgt über TDMA in Verbindung mit der Konfigurierung der Zeitfenster.

Der Interactive Network Adapter INA beinhaltet eine Einheit 1, die die Hauptaufgaben des Interactive Network Adapter INA: Protokollanpassung, Kollisionserkennung, Weiterleiten der ersten und zweiten Informationen zum Interaction Network NET bzw. zum Interactive Service Provider, usw. ausführt. Die Einheit 1 ist beispielsweise als Digitaler Signalprozessor oder als Mikroprozessor inklusive der entsprechenden Programmierung ausgeführt. Der Interactive Network Adapter INA beinhaltet ferner eine Detektionseinheit DET und eine Verarbeitungseinheit 2, die miteinander verbunden sind. Die Detektionseinheit DET ist geeignet, den Rückkanal zu überwachen und das Verkehrsaufkommen über die Zeit zu detektieren. Die Verarbeitungseinrichtung 2 ist geeignet, aus dem detektierten Verkehrsaufkommen eine optimierte Parametrierung zu ermitteln und die Zeitfenster mittels dieser Parametrierung zu konfigurieren.

Die Detektionseinheit DET überprüft z.B., welche Zeitfenster zu welchen Zeitpunkten belegt sind, z.B. mittels eines Zählers, und speichert diese Angaben in Form einer Tabelle in einem Speicher ab. Des weiteren erhält die Detektionseinheit DET von der Einheit 1 Informationen darüber, ob Anforderungen für einen vorgegebene Zweck von Endstellen END bestehen und diese Anforderungen auf Grund von zeitweise nicht entsprechend verfügbaren Zeitfenstern nicht erfüllt werden können, und speichert diese ebenfalls ab. Beispielsweise bestehen Anforderungen von zwanzig Endstellen zur gleichzeitigen Nutzung von ranging Zeitfenstern, während nur zehn ranging Zeitfenster zur Verfügung stehen. Nach Ablauf einer vorgegebene Zeitspanne, z.B. jede Minute, überträgt die Detektioneinheit DET die detektierten und abgespeicherten Informationen zur Verarbeitungseinheit 2. Die Verarbeitungseinheit 2 vergleicht diese Informationen mit der aktuellen Konfiguration der Zeitfenster. Sind beispielsweise nur zehn der zwanzig verfügbaren ranging Zeitfenster gleichzeitig belegt gewesen, so kann die Anzahl der ranging Zeitfenster reduziert werden, z.B. um zehn. Sind beispielsweise gleichzeitig zwanzig Anforderungen für contention Zeitfenster eingegangen, während nur zehn contention Zeitfenster zur Verfügung standen, so können die Zahl der contention Zeitfenster um zehn erhöht und dafür die Anzahl der ranging Zeitfenster um zehn reduziert werden. Dadurch wird eine bedarfsgerechte Aufteilung der vorhandenen Zeitfenster/Kapazität erreicht. Die Konfiguration der Zeitfenster wird somit stets dem aktuellen Bedarf angepaßt und dadurch optimiert.

Unabhängig von der beispielsweise minütlichen Auswertung des Verkehrsaufkommens kann das Verkehrsaufkommen auch über mehrere Tage gespeichert und anschließend separat ausgewertet werden, um beispielsweise einen tagesabhängigen Bedarf festzustellen. Beispielsweise wird täglich von 20.00 bis 20.15 Uhr ein erhöhter Bedarf an contention Zeitfenstern registriert. Dann kann vorausschauend für den nächsten Tag bereits eine entsprechende Anzahl von contention Zeitfenstern für die Zeit von 20.00 bis 20.15 Uhr vorgesehen werde. Auf diese Art und Weise wird nicht nur nachgeregelt, also auf den Bedarf der Endstellen END reagiert, sondern der aktuelle Bedarf wird anhand der Charakteristika der vorrangegangenen Tagesanforderungen vorhergesehen und aktiv in die Planung der Konfiguration der Zeitfenster eingebaut. Dieses Verfahren ähnelt dem Verfahren der Bereitstellung der Stromversorgung, die zu gewissen Spitzenzeiten, z.B. um 12.00 Uhr mittags einen erhöhten Bedarf hat, so daß zu dieser Zeit mehr Leistung auf den Stromnetzen zur Verfügung stehen muß.

Der Interactive Network Adapter INA beinhaltet ferner einen Speicher, in dem Parameter einer Standard-Konfiguration abspeicherbar sind. Die Standard-Konfiguration beinhaltet Minimal- und Maximalwerte für die Anzahl der zuweisbaren Zeitfenster. So können durch die Verarbeitungseinheit 2, die Zugriff auf den Speicher hat, als ranging Zeitfenster nicht weniger als der dafür vorgesehene Minimalwert und nicht mehr als der dafür vorgesehene Maximalwert zugewiesen werden. Vergleichbares gilt für die contention Zeitfenster, die fixed rate Zeitfenster und die reservation Zeitfenster. Die Minimal- und Maximalwerte sollen verhindern, daß sich das System selbst blockiert.

Die Parameter der Standard-Konfiguration können z.B. manuell oder maschinell in den Speicher des Interactive Network Adapter INA eingegeben werden oder über das Netzwerk Management NM zum Interactive Network Adapter INA übertragen werden. Neben den Minimal- und Maximalwerten können in der Standard-Konfiguration auch default Werte angegeben werden, die z.B. bei der Initialisierung des Systems benutzt werden können. Das Netzwerk Management NM kann zusätzlich die Möglichkeit haben die default Werte direkt in die Einheit 1 einzugeben, was im Falle eines Ausfalls der Verarbeitungseinheit 2 sinnvoll ist. Des weiteren können Überwachungsfunktionen durch das Netzwerk Management NM wahrgenommen werden.

Die aktuelle Konfiguration der Zeitfenster wird den Endstellen END über den Vorwärtskanal mitgeteilt, damit die Endstellen END wissen in welchen Zeitfenstern sie welche Daten übertragen können.

Im folgenden wird ein Verfahren zur optimierten Konfigurierung der Zeitfenster beschrieben:
1. Nach einem kompletten Neustart des Systems, d.h. keine der Endstellen END ist aktiv, werden die meisten der Zeitfenster als ranging Zeitfenster konfiguriert.
2. Während des Betriebs wird die Anzahl der benötigten ranging Zeitfenster durch die Anzahl der in einer vorangegangenen Zeitspanne sich aufsynchronisieren wollenden Endstellen END ermittelt unter Berücksichtigung der bis zum jeweiligen Zeitpunkt bereits aufsynchronisierten/angemeldeten Endstellen.
3. Anfragen von Endstellen END nach fixed rate Zeitfenstern werden nur solange vergeben, bis eine maximale Anzahl vergeben ist. Darüber hinaus eintreffende Anfragen werden im Falle von Telefonverbindungen durch das Besetztzeichen beantwortet.
4. Zu Beginn werden die verbleibenden unbelegten Zeitfenster geichmäßig in contention Zeitfenster und reservation Zeitfenster aufgeteilt oder durch eine geeignete default Zuweisung vergeben.
5. Die Kollisionen in den contention Zeitfenstern werden überwacht. Treten mehr Kollisionen als ein vorgegebener Maximalwert auf, so wird die Anzahl der contention Zeitfenster erhöht. Treten weniger Kollisionen als ein vorgegebener Minimalwert auf, so wird die Anzahl der contention Zeitfenster verringert. Ist die Anzahl der auftretenen Kollisionen zwischen Minimal- und Maximalwert, so bleibt die Anzahl der contention Zeitfenster unverändert. Die Nachregelung der Anzahl der contention Zeitfenster erfolgt mit einer entsprechenden Zeitverzögerung, um einen stabilen eingeschwungenen Zustand zu erreichen. Kollisionen können beispielsweise über die bit error rate detektiert werden, die ihrerseits aus der forward error correction gewonnen wird; bit error rate= Bitfehlerrate, forward error correction=Vorwärtsfehlerkorrektur.
6. Im Falle einer Blockierung des Systems (overload situation) können beispielsweise die Zeitspannen (wait timers) für einen erneuten Zugriff auf die contention Zeitfenster in den Endstellen vergrößert werden, z.B. telemetrisch durch den Interactive Network Adapter INA, oder die Anzahl der reservation Zeitfenster reduziert werden.
7. Im Falle einer totalen Blockierung des Systems ist vorgesehen, jeder aktiven Endstelle END eine vorgegebene Datenrate zur Verfügung zu stellen, um einen Minimalverkehr zu ermöglichen.

Die Standard-Konfiguration, insbesondere die Minimal- und Maximalwerte können vom Netzbetreiber vorgegeben werden, um das System auf die speziellen Wünsche des Netzbetreibers einzurichten.

Im Ausführungsbeispiel sind die Detektionseinheit und die Verarbeitungseinheit im Interactive Network Adapter angeordnet. Die Detektionseinheit und die Verarbeitungseinheit können auch im Netzwerk Management oder in einer anderen Einrichtung im System angeordnet werden. Ein Netzwerk Management kann somit beispielsweise die Konfiguration mehrerer Systeme steuern, verwalten und insbesondere dynamisch verändern.

## Patentansprüche

1. Einrichtung eines Systems für interaktive und kommunikative Dienste (SYS) zur Übertragung von Informationen zu einer Vielzahl von Endstellen (END) über einen Vorwärtskanal des Systems für interaktive und kommunikative Dienste (SYS) und zum Empfang von Informationen von der Vielzahl von Endstellen (END) über einen Rückkanal des Systems für interaktive und kommunikative Dienste (SYS), wobei für die Übertragung im Rückkanal eine Rahmenstruktur vorgegeben ist, die mehrere Zeitfenster beinhaltet, und wobei mindestens einem Teil der Zeitfenster mittels Parametrierung eine Konfiguration beinhaltend die Reservierung des jeweiligen Zeitfensters für einen bestimmten Zweck zuweisbar ist,
**dadurch gekennzeichnet,**
daß die Einrichtung eine Detektionseinheit (DET) und eine Verarbeitungseinheit (2) beinhaltet, die miteinander verbunden sind, daß die Detektionseinheit (DET) geeignet ist, den Rückkanal zu überwachen und das Verkehrsaufkommen über die Zeit zu detektieren, und daß die Verarbeitungseinrichtung (2) geeignet ist, aus dem detektierten Verkehrsaufkommen eine optimierte Parametrierung zu ermitteln und die Zeitfenster mittels dieser Parametrierung zu konfigurieren.

2. Einrichtung nach Anspruch 1, dadurch gekennzeichnet, daß die Einrichtung eine Schnittstelle zu einem Netzwerkmanagement (NM) aufweist, und daß die Einrichtung geeignet ist, über diese Schnittstelle Parameter für eine Standard-Konfiguration beinhaltend Minimal- und Maximalwerte zu empfangen und diese Parameter der Verarbeitungseinheit (2) zu übertragen, und daß die Verarbeitungseinrichtung (2) geeignet ist, aus dem detektierten Verkehrsaufkommen unter Berücksichtigung der Standard-Konfiguration die optimierte Parametrierung zu ermitteln.

3. Einrichtung nach Anspruch 1, dadurch gekennzeichnet, daß die Einrichtung einen Speicher zum Abspeichern von Parametern einer Standard-Konfiguration beinhaltend Minimal- und Maximalwerte aufweist, und daß die Verarbeitungseinrichtung (2) geeignet ist, aus dem detektierten Verkehrsaufkommen unter Berücksichtigung der Standard-Konfiguration die optimierte Parametrierung zu ermitteln.

4. Einrichtung nach Anspruch 1, dadurch gekennzeichnet, daß die aktuelle Konfiguration der Zeitfenster über den Vorwärtskanal zu den Endstellen übertragen wird.

5. Einrichtung nach Anspruch 1, dadurch gekennzeichnet, daß anstelle der Zeitfenster Frequenzfenster oder Code-Multiplex-Fenster konfiguriert werden.

6. Interaktiver Netzwerk Adapter (INA) nach ETS 300 800 Version 22. April 1998, dadurch gekennzeichnet, daß der Interaktive Netzwerk Adapter (INA) eine Einrichtung nach Anspruch 1 beinhaltet.

7. Interaktiver Netzwerk Adapter (INA) nach Anspruch 5, dadurch gekennzeichnet, daß die Übertragung im Rückkanal mindestens abschnittsweise in Form von ATM Zellen erfolgt, und daß die Konfigurierung der Zeitfenster als ranging, contention, reservation und/oder fixed rate erfolgt.

8. Verfahren zum Konfigurieren von Zeitfenstern für ein System für interaktive und kommunikative Dienste (SYS), das eine Einrichtung zur Übertragung von Informationen zu einer Vielzahl von Endstellen (END) über einen Vorwärtskanal des Systems für interaktive und kommunikative Dienste (SYS) und zum Empfang von Informationen von der Vielzahl von Endstellen (END) über einen Rückkanal des Systems für interaktive und kommunikative Dienste (SYS) beinhaltet, wobei für die Übertragung im Rückkanal eine Rahmenstruktur vorgegeben ist, die mehrere Zeitfenster beinhaltet, und wobei mindestens einem Teil der Zeitfenster mittels Parametrierung eine Konfiguration beinhaltend die Reservierung des jeweiligen Zeitfensters für einen bestimmten Zweck zuweisbar ist,
**dadurch gekennzeichnet,**
daß der Rückkanal überwacht und das Verkehrsaufkommen über die Zeit detektiert wird, und daß aus dem detektierten Verkehrsaufkommen eine optimierte Parametrierung ermittelt und die Zeitfenster mittels dieser Parametrierung konfiguriert werden.

9. Einrichtung eines Systems für interaktive und kommunikative Dienste (SYS) mit einem Vorwärtskanal und einem Rückkanal, wobei für die Übertragung im Rückkanal eine Rahmenstruktur vorgegeben ist, die mehrere Zeitfenster beinhaltet, und wobei mindestens einem Teil der Zeitfenster mittels Parametrierung eine Konfiguration beinhaltend die Reservierung des jeweiligen Zeitfensters für einen bestimmten Zweck zuweisbar ist,
**dadurch gekennzeichnet,**
daß die Einrichtung eine Detektionseinheit (DET) und eine Verarbeitungseinheit (2) beinhaltet, die miteinander verbunden sind, daß die Detektionseinheit (DET) geeignet ist, den Rückkanal eines Systems für interaktive und kommunikative Dienste (SYS) zu überwachen und das Verkehrsaufkommen über die Zeit zu detektieren, und daß die Verarbeitungseinrichtung (2) geeignet ist, aus dem detektierten Verkehrsaufkommen eine optimierte Parametrierung zu ermitteln und die Zeitfenster mittels dieser Parametrierung telemetrisch zu konfigurieren.
